# EUROPÄISCHE PATENTANMELDUNG

(11) **EP 4 537 652 A1**
(43) Veröffentlichungstag der Anmeldung: **16.04.2025**
(21) Anmeldenummer: 24205750.3
(22) Anmeldetag: 10.10.2024
(51) Int. Cl.: A01D 61/02, B29D 29/00, B29D 29/06, B65G 15/34, B65G 15/46, B65G 15/40, A01D 61/00

(54) **FÖRDERGURT MIT QUERSTABILEM MITNEHMER**

(30) Priorität: 12.10.2023 DE 102023127842
(71) Anmelder: Noltewerk GmbH & Co. KG, 48268 Greven (DE)
(72) Erfinder: van Üüm, Christoph, 48712 Gescher (DE)
(74) Vertreter: Lenzing Gerber Stute

(57) **Zusammenfassung**

Die Erfindung betrifft einen endlosen Fördergurt (1) aus vernetztem Polymer mit einer Vielzahl an Mitnehmern (3), die auf einer Tragseite (2) des endlosen Fördergurtes (1) aufvulkanisiert sind, wobei die Mitnehmer (3) eine Höhe aufweisen, die in einem Bereich zwischen 10 mm und 60 mm liegt, und wobei der Mitnehmer aus vernetztem Polymer mit mindestens einer eingebetteten Gewebelage gebildet ist.

## Beschreibung

Die vorliegende Erfindung betrifft einen Fördergurt mit den Merkmalen des Oberbegriffs des Anspruchs 1, eine Verwendung des Fördergurtes, einen Förderer, sowie ein Verfahren zur Herstellung eines endlosen Fördergurtes.

Fördergurte mit Mitnehmern, die auf der Oberfläche angeordnet sind, sind aus der Praxis bekannt. Es gibt verschiedene Einsatzbereiche bei denen die Fördergurte eine hohe Querstabilität aufweisen müssen. In der Landwirtschaft z. B. werden solche querstabilen Fördergurte zum Fördern von Erntegut eingesetzt. Insbesondere können solche Fördergurte in Querfördervorrichtungen, beispielsweise in Bandschwadern eingesetzt. Bandschwader nehmen das Erntegut über eine Aufnahmevorrichtung, Pickup-Vorrichtung genannt, auf, welche mit Zinken oder Rechen versehen sind und zwischen Aufnahmeflächen in einer Ebene parallel zur Fahrrichtung laufen, und dabei das Erntegut vom Boden aufnehmen und dem Querförderbändern zuführen. Mittels der Querfördervorrichtung wird das Erntegut dann seitlich zur Fahrtrichtung gefördert und wieder auf den Boden als Schwad oder dergleichen abgelegt. Querfördervorrichtungen werden auch in Mähmaschinen mit einem Mähwerk zum Fördern des abgemähten Erntegutes eingesetzt, wie beispielsweise in Draper-Schneidwerken.

Auch in sogenannten Knickförderern, beispielsweise mit Z-Bauform, die ein Fördern mit größeren Steigungen ermöglichen, ist der Einsatz solcher querstabilen Fördergurte bekannt.

Ein weiterer Einsatzbereich für besonders querstabile Fördergurte sind Muldenbandstrahlanlagen, in denen mittels der Fördergurtes umgewälzte Werkstücke in einem Strahlverfahren zum Entzundern, Entrosten und Entgraten bearbeitet werden.

Bei den genannten Einsatzzwecken werden Fördergurte aus vernetztem Polymer, insbesondere Gummi mit einer Vielzahl an eingebetteten Gewebelagen eingesetzt. Es ist bekannt, die auf dem Fördergurt befestigten Mitnehmer aus einem elastischen Material zu fertigen. Die Mitnehmer müssen stabil genug sein, um dem zu transportierendem Gut standzuhalten und dürfen dabei das Umlaufen des Fördergurtes um die Rollen nicht behindern.

Es ist eine Aufgabe der Erfindung einen Fördergurt mit Mitnehmern anzugeben, der querstabil ist und dennoch leicht und günstig herzustellen ist und einen damit einhergehenden einfachen Aufbau aufweist.

Diese Aufgabe wird gelöst von einem Fördergurt mit den Merkmalen des Anspruchs 1, von einer Verwendung des Fördergurtes, von einem Förderer mit den Merkmalen des Anspruchs 6, sowie von einem Verfahren zur Herstellung eines endlosen Fördergurtes mit den Merkmalen des Anspruchs 8.

Demnach ist ein endloser Fördergurt aus vernetztem Polymer mit einer Vielzahl an Mitnehmern, die auf einer Tragseite des endlosen Fördergurtes befestigt, insbesondere aufvulkanisiert oder geklebt sind, wobei die Mitnehmer eine Höhe aufweisen, die in einem Bereich zwischen 10 mm und 60 mm, insbesondere zwischen 10 mm und 40 mm liegt. Vorzugsweise weisen alle Mitnehmer dieselbe Höhe auf. Die Mitnehmer sind aus vernetztem Polymer mit mindestens einer eingebetteten Gewebelage gebildet. Die Mitnehmer sind dadurch besonders querstabil. Der endlose Fördergurt kann aufgrund der Querstabilität der Mitnehmer deutlich einfacher ausgebildet sein und weißt dennoch in der Gesamtheit die benötigte Querstabilität auf.

Bevorzugt weist der endlose Fördergurt höchstens drei eingebettete Gewebelagen auf. In einer Ausführungsform sind die Mitnehmer aus einem gefalteten Fördergurtabschnitt gebildet, wobei der Fördergurtabschnitt aus vernetztem Polymer mit einer Gummideckschicht und mindestens einer, bevorzugt mindestens zwei eingebetteten Gewebelagen gebildet ist, wobei in zwei Fußbereichen des Mitnehmers der Fördergurtabschnitt einlagig liegt. Das Merkmal einlagig bezieht sich auf den Fördergurtabschnitt und nicht auf die Anzahl der Gewebelagen in dem Fördergurtabschnitt.

Vorzugsweise ist zumindest im Bereich der Übergänge von den Fußbereichen zu dem gefalteten doppellagigen Fördergurtabschnitt eine Gummideckschicht des Fördergurtabschnitts, die in dem gefalteten doppellagigen Fördergurtabschnitt jeweils auf der Innenseite liegt, entfernt. Dadurch kann der endlose Fördergurt auch um relativ kleinradialige Umlenkwalzen gut umlaufen.

In einer anderen Ausführungsform sind die Mitnehmer mittels Extruder gebildet. Dabei kann vorgesehen sein, dass die äußere Schicht der Mitnehmer und somit auch die obere Kante von einer Gewebelage gebildet wird und der Mitnehmer dadurch als Gleitelement fungieren kann.

Vorzugsweise weist die in den Mitnehmern verwendete Gewebelage(n) in Querrichtung ein Monofilament auf.

Der endlose Fördergurt weist vorzugsweise Gummi auf und die höchstens drei Gewebelagen sind bevorzugt ein EP Gewebe, wobei es besonders günstig ist, dass die Gewebelagen aus Multifilamenten gebildet sind.

In einer bevorzugten Ausführungsform hat der endlose Fördergurt eine einzige Gewebelage und ist dadurch besonders einfach aufgebaut.

Außerdem ist eine Verwendung eines zuvor beschriebenen endlosen Fördergurtes in einer Querfördervorrichtung eines Draper-Schneidwerkes oder eines Bandschwaders vorgesehen. Die weiteren möglichen Anwendungsfälle sind vorstehend beschrieben.

Zudem ist ein Förderer mit einem zuvor beschriebenen endlosen Fördergurt vorgesehen, wobei bevorzugt die Mitnehmer im Wesentlichen quer zur Längsrichtung des endlosen Fördergurtes angeordnet und in Längsrichtung des endlosen Fördergurtes gleichmäßig beabstandet sind, und wobei der endlose Fördergurt über Umlenkrollen umläuft und ein Abstand zwischen zwei aufeinanderfolgenden Mitnehmern kleiner ist als die Längserstreckung eines Abtragbereichs von Umlenkrollen oder bei tragseitiger Führung, beispielsweise in einem Knickförderer, ist der Abstand kleiner als der Abstand zwischen den tragseitig angeordneten Stollen, so dass sichergestellt ist, dass beim Fördern stets ein Mitnehmer im Bereich der Stollen liegt und dadurch der Fördergurt besonders formstabil ausgebildet ist.

Außerdem ist ein Verfahren zur Herstellung eines endlosen Fördergurtes aus vernetztem Polymer mit insbesondere höchstens drei eingebetteten Gewebelagen mit Mitnehmern aufweisend die folgenden Schritte vorgesehen:
a) Bereitstellen eines Fördergurtabschnittes, wobei der Fördergurtabschnitt aus vernetztem Polymer mit insbesondere einer Gummideckschicht und mindestens einer, insbesondere zwei eingebetteten Gewebelagen gebildet ist,
b) Falten des Fördergurtabschnittes und Ausbilden eines doppellagigen Bereichs, wobei in der Mitte des gefalteten doppellagigen Bereichs bevorzugt die Gummideckschicht aufeinander liegt,
c) Insbesondere Entfernen der Gummideckschicht in zwei Bereichen zur Ausbildung eines jeweiligen Fußbereichs,
d) Umbiegen der beiden Fußbereiche aus der Ebene der Faltung heraus nach jeweils außen und dadurch Ausbilden eines Mitnehmers,
e) Befestigen des Mitnehmers auf einer Tragseite des endlosen Fördergurtes durch Aufbringen der beiden Fußbereiche mittels Vulkanisation oder Kleben.

Die Schritte werden bevorzugt in der genannten Reihenfolge ausgeführt. Insbesondere wird der Fördergurtabschnitt auf der Innenseite bei der Faltung vulkanisiert.

Eine bevorzugte Ausführungsformen der Erfindung wird nachfolgend anhand der Zeichnungen näher erläutert. Gleichartige oder gleichwirkende Bauteile werden in den Figuren mit denselben Bezugszeichen bezeichnet.

Es zeigen:
- Fig. 1:: eine schematische Darstellung eines Endlosfördergurtes mit Mitnehmern,
- Fig. 2:: eine Ansicht von schräg unten auf ein Ende eines erfindungsgemäßen Mitnehmers des Endlosfördergurtes der Figur 1, sowie
- Fig. 3:: eine Ansicht von schräg oben auf das Ende des erfindungsgemäßen Mitnehmers der Figur 2.

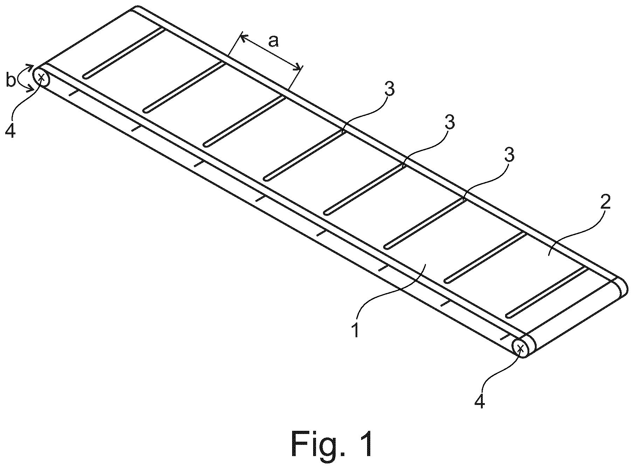

Figur 1 zeigt einen Endlosfördergurt 1 mit auf der Tragseite 2 angeordneten Mitnehmer 3. Die Mitnehmer 3 erstrecken sich durchgängig nahezu über die gesamte Breite des Endlosfördergurtes 1 und sind entlang der Laufrichtung des Fördergurtes 1 gleichmäßig beabstandet angeordnet. Die Mitnehmer 3 sind mit ihren Längsachsen quer zur Laufrichtung des Endlosfördergurtes 1 ausgerichtet. Die Mitnehmer 3 sind auf der Oberseite des Endlosfördergurtes 1 aufvulkanisiert. Die Befestigung der Mitnehmer 1 durch Aufvulkanisieren macht ein Ablösen derselben vom Fördergurt insbesondere beim Umlenken des Gurtes unmöglich, da infolge der Elastizität des Materials keine schädlichen Zugspannungen auftreten.

Der Endlosfördergurt 1 läuft auf Umlenkrollen 4 um. Der Abstand a zwischen den Mitnehmer 3 ist derart gewählt, dass eine Auflagefläche auf den Umlenkrollen bzw. der Abtragbereich b der Umlenkrollen größer ist als der Abstand a zwischen den Mitnehmern 3. Dadurch kann sichergestellt werden, dass immer mindestens zwei aufeinanderfolgende Mitnehmer 3 innerhalb des Abtragbereichs b liegen.

Der Endlosfördergurt 1 ist ein Fördergurt aus vernetztem Polymer, insbesondere Gummi mit mindestens einer eingebetteten Gewebelage. Für die genannten Anwendungen muss der Fördergurt 1 eine gute Querstabilität aufweisen. Die Querstabilität kann erreicht werden, in dem der Fördergurt 1 beispielsweise mehrlagig mit mehreren Gewebelagen ausgebildet wird. Solche Fördergurte sind durch den komplexen Aufbau kostspielig zu fertigen. Erfindungsgemäß werden daher besonders querstabile Mitnehmer 3 eingesetzt, wodurch der Fördergurt 1 an sich eine geringe Querstabilität als herkömmlich benötigt aufweisen kann.

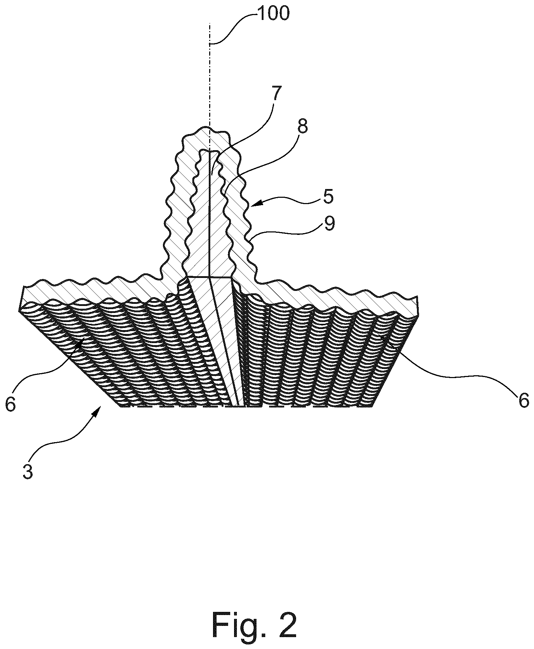

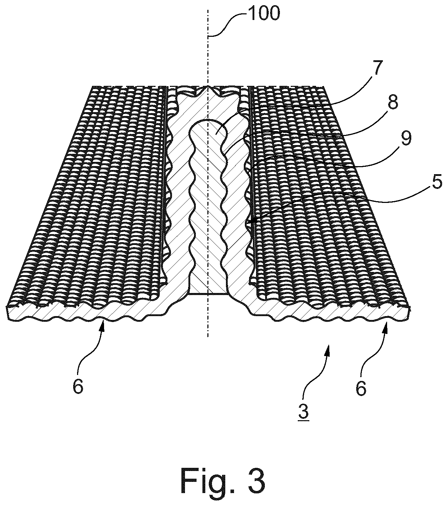

Wie in den Figuren 2 und 3 dargestellt, ist ein Mitnehmer 3 dargestellt. Der Mitnehmer 3 ist aus einem Fördergurtabschnitt aus vernetztem Polymer, insbesondere Gummi mit mindestens einer Gewebelage gebildet. Der Fördergurtabschnitt wird mittig um die Längsachse 100 gefaltet, so dass sich ein Bereich 5 mit zwei übereinander liegenden Lagen ausbildet, in dem der Fördergurtabschnitt doppelt liegt. Anschließend an diesen Bereich 5 ist beidseitig ein Fußabschnitt 6 des Mitnehmers 3 ausgebildet. Die beiden Fußabschnitte 6 liegen dabei in einer gemeinsamen Ebene, die sich etwa senkrecht zum doppellagigen Bereich 5 erstreckt. Der doppellagige Bereich 5 bildet somit eine Erhöhung aus, die beim Einsatz des Fördergurtes als Prallfläche wirkt.

Der Fördergurtabschnitt weist eine Gummideckschicht 7 und zwei schematisch dargestellte Gewebelagen 8,9 auf, wobei die der Gummideckschicht 7 ferne Gewebelage 9 den Fördergurtabschnitt nach außen hin abschließt und nicht von einer zweiten Gummideckschicht abgedeckt ist. Die Gummideckschicht 7 befindet sich bei der Faltung auf der Innenseite. Um die Faltung zu vereinfachen und eine hohe Flexibilität beim Umlauf des Fördergurte über die Umlenkrolle herbeizuführen, wurde die Gummideckschicht 7 in den beiden Fußbereichen 6 und am Übergang zum doppellagigen Bereich 5 entfernt. Es ist auch denkbar, lediglich im Knickbereich (Übergang zwischen dem jeweiligen Fußbereich und dem doppellagigen Bereich) die Gummideckschicht zu entfernen bzw. zu schwächen. In den beiden Fußbereichen 6 weist der Mitnehmer 3 somit jeweils außenliegend eine eingebettete Gewebelage 8,9 und dazwischen eine Gummischicht auf. Die ursprünglich unterhalb der Gummideckschicht liegende Gewebelage 8 wird dann, nicht dargestellt, auf die Tragseite des Fördergurtes aufvulkanisiert. Der ausgebildete Mitnehmer 3 weist im Bereich der Erhöhung insgesamt vier Gewebelagen 8,9 auf, die sich in Längsrichtung des Mitnehmers 3 erstrecken und in einem Großteil des doppellagigen Bereichs etwa parallel zueinander liegen und etwa senkrecht auf der Tragseite des Fördergurtes stehen. Durch die Faltung ist die Erhöhung des Mitnehmers abgerundet. Es kann auch sein, dass die Faltung plattgedrückt wird, wenn die beiden Lagen nach der Faltung mittels Vulkanisation verbunden werden.

Der zur Herstellung des Mitnehmers verwendete Fördergurtabschnitt muss kein Abschnitt des Endlosfördergurtes sein, auf den der Mitnehmer aufvulkanisiert wird. In anderen Worten, der Aufbau kann unterschiedlich sein. Bevorzugt weist der Endlosfördergurt mindestens zwei Gewebelagen auf, wobei eine innenliegende Gewebelage vorzugsweise aus Monofilamenten gebildet ist.

In einer vorteilhaften Ausführungsform handelt es sich bei den Gewebelagen um EP Gewebe mit Polyester in Längsrichtung und Polyamid in Querrichtung. Es sind aber auch andere Gewebe denkbar, wobei in Querrichtung bevorzugt ein Monofilament eingesetzt wird.

Zusätzlich zu den Gewebelagen kann in dem Fördergurt ein Schlitzschutz vorgesehen sein. Dazu kann in der Gummideckschicht tragseitig eine Stahlseilquerarmierung vorhanden sein, die das Eindringen von Fremdkörpern und scharfkantigen Objekten in den Festigkeitsträger des Fördergurts deutlich erschwert. Außerdem erhöht die Stahlseilquerarmierung (auch Stahlbreaker genannt) die Querstabilität.

Der Fördergurt weist bevorzugt maximal drei Gewebeschichten auf, bevorzugt eine einzige Gewebeschicht. Der Aufbau des Fördergurtes ist dadurch weniger komplex und der Fördergurt ist deutlich günstiger herstellbar.

Der Fördergurtabschnitt, der den Mitnehmer ausbildet, ist vorzugsweise aus maximal fünf Gewebelagen gebildet. Die Höhe der Mitnehmer liegt bevorzugt in einem Bereich zwischen 10 mm und 60 mm. Die Höhe ist der Abstand zwischen der Tragseite des Fördergurtes und einer oberen Kante des Mitnehmers.

Die Fördergurte haben eine Breite die zwischen 0,2 und 2,5 m liegt.

Die Mitnehmer können, wie in Figur 1 dargestellt, durchgängig über die Gurtbreite ausgebildet sein. Es ist aber auch denkbar, dass die Mitnehmer über die Breite des Fördergurtes geteilt sind. Dabei weisen die Mitnehmer bevorzugt einen Überlapp in Querrichtung auf. Die Mitnehmer weisen bevorzugt eine über die Fördergurtbreite konstante Höhe auf. Es ist aber auch denkbar, dass die Mitnehmer im Bereich der Erhöhung Ausnehmungen oder dergleichen aufweisen und die Höhe der Mitnehmer variiert.

Es ist auch denkbar, die Mitnehmer mittels eines Extruders Herzustellen. Dabei sind die Mitnehmer bevorzugt, wie vorstehend beschrieben, ausgebildet. In eine Form kann die mindestens eine Gewebelage eingelegt werden und vernetztest Polymer, insbesondere Gummi um die Gewebelage herum geformt werden. Die Form ist dabei derart gewählt, dass sich ebenfalls Fußbereiche ausbilden. Im Gegensatz zum Faltvorgang können dabei die Mitnehmer derart ausgebildet werden, dass die äußere Schicht bzw. Außenseite von einer Gewebelage gebildet wird und der Mitnehmer dadurch als Gleitelement fungieren können.

## Patentansprüche

1. Endloser Fördergurt (1) aus vernetztem Polymer mit einer Vielzahl an Mitnehmern (3), die auf einer Tragseite (2) des endlosen Fördergurtes (1) befestigt sind, wobei die Mitnehmer (3) eine Höhe aufweisen, die in einem Bereich zwischen 10 mm und 60 mm liegt, **dadurch gekennzeichnet, dass** die Mitnehmer (3) aus vernetztem Polymer mit mindestens einer eingebetteten Gewebelage (8,9) gebildet ist.

2. Endloser Fördergurt nach Anspruch 1, **dadurch gekennzeichnet, dass** die Mitnehmer (3) aus einem gefalteten Fördergurtabschnitt gebildet sind oder in einem Extruder ausgeformt sind.

3. Endloser Fördergurt nach Anspruch 1 oder 2, **dadurch gekennzeichnet, dass** der endlose Fördergurt (1) Gummi aufweist und dass der endlose Fördergurt (1) höchstens drei Gewebelage umfasst.

4. Endloser Fördergurt nach einem der vorhergehenden Ansprüche,
**dadurch gekennzeichnet, dass** der endlose Fördergurt (1) eine einzige Gewebelage aufweist.

5. Verwendung eines endlosen Fördergurtes (1) nach einem der vorhergehenden Ansprüche in einer Querfördervorrichtung eines Draper-Schneidwerkes oder eines Bandschwaders.

6. Förderer mit einem endlosen Fördergurt (1) nach einem der Ansprüche 1 bis 4.

7. Förderer nach Anspruch 6, **dadurch gekennzeichnet, dass** die Mitnehmer (3) im Wesentlichen quer zur Längsrichtung des endlosen Fördergurtes (1) angeordnet sind und in Längsrichtung des endlosen Fördergurtes (1) gleichmäßig beabstandet sind, wobei der endlose Fördergurt (1) über Umlenkrollen (4) umläuft und ein Abstand (a) zwischen zwei aufeinanderfolgenden Mitnehmern (3) kleiner ist als ein Abtragbereich (b) der Umlenkrollen (4).

8. Verfahren zur Herstellung eines endlosen Fördergurtes (1) aus vernetztem Polymer mit Mitnehmern (3), die eine Höhe aufweisen, die in einem Bereich zwischen 10 mm und 60 mm liegt, aufweisend die folgenden Schritte:
a) Bereitstellen eines Fördergurtabschnittes, wobei der Fördergurtabschnitt aus vernetztem Polymer mit mindestens einer eingebetteten Gewebelage (8,9) gebildet ist,
b) Falten des Fördergurtabschnittes und Ausbilden eines doppellagigen Bereichs (5),
c) Schwächen des Fördergurtabschnittes in zwei Bereichen zur Ausbildung eines jeweiligen Fußbereichs (6),
d) Umbiegen der beiden Fußbereiche (6) aus der Ebene der Faltung heraus nach jeweils außen und dadurch Ausbilden eines Mitnehmers (3),
e) Befestigen des Mitnehmers (3) auf einer Tragseite des endlosen Fördergurtes (1) durch Aufbringen der beiden Fußbereiche (6) mittels Vulkanisation oder Kleben.
